# EUROPÄISCHE PATENTSCHRIFT

(11) **EP 2 016 216 B1**
(45) Veröffentlichungstag und Bekanntmachung des Hinweises auf die Patenterteilung: **23.02.2011**
(21) Anmeldenummer: 07724937.3
(22) Anmeldetag: 07.05.2007
(51) Int. Cl.: D03D 1/02, B60R 21/235

(54) **NAHTKONSTRUKTION FUR EIN GEWEBE**
SEAM CONSTRUCTION FOR A WOVEN FABRIC
CONSTRUCTION DE JOINT POUR UN TISSU

(30) Priorität: 05.05.2006 DE 102006021082
(43) Veröffentlichungstag der Anmeldung: 21.01.2009
(73) Patentinhaber: Global Safety Textiles GmbH, 79689 Maulburg (DE)
(72) Erfinder: BECKER, Michael, 79677 Schönau (DE); ESCHBACH, Thomas, 79713 Bad Säckingen (DE); ENDERLEIN, Andreas, 79730 Murg (DE)
(74) Vertreter: Fischer, Matthias
(86) Internationale Anmeldenummer: PCT/EP2007/004013
(87) Internationale Veröffentlichungsnummer: WO 2007/128547

(56) Entgegenhaltungen:
- WO-A-03/078711
- WO-A-2005/031052
- DE-A1- 10 326 757
- DE-A1- 19 859 767
- JP-A- 2 204 151
- US-A1- 2001 026 066

## Beschreibung

### Technisches Gebiet

Die vorliegende Erfindung betrifft eine Nahtkonstruktion für ein Gewebe für einen OPW-Airbag, insbesondere für Personenrückhaltesysteme, mit einer Webnaht mit einem einlagigen Bereich, welcher von einem wenigstens zweilagigen Bereich umgeben ist, dessen einzelne Lagen jeweils eine losere Gewebestruktur aufweisen als der einlagige Bereich.

### Stand der Technik

An derzeit im Einsatz befindlichen One-Piece-Woven (OPW)-Luftsäcken mit einlagigen und mehrlagigen Bereichen, auf die zur Abdichtung eine Auflage, z. B. ein Folie aufgebracht wird, besteht die Gefahr, dass in einlagigen Bereichen, welche eine für darin zusammengeführte mehrlagige Bereiche gleichsam nahtähnliche Verbindung bilden, in der Gewebeebene Gas austritt, da die Auflage, die den Luftsack abdichten soll, nur jeweils an den Oberflächen, sprich der Ober- und Unterseite aufgebracht ist und in der Gewebeebene ein seitliches Entweichen von Gas jedoch nicht behindert.

Die WO 2005/031052 offenbart eine Nahtkonstruktion gemäß dem Oberbegriff des Anspruchs 1, nämlich für ein Gewebe für einen OPW-Airbag, insbesondere für Personenrückhaltesysteme, wobei eine Webnaht mit einem einlagigen Bereich (b), welcher von einem wenigstens zweilagigen Bereich (c) umgeben ist, dessen einzelne Lagen jeweils eine losere Gewebestruktur aufweisen als der einlagige Bereich.

Aus der DE 103 26 757 A1 ist eine Gewebekonstruktion für eine Naht eines OPW-Luftsackes bekannt, bei der aufgrund einer bindungstechnisch loseren Gewebekonstruktion im einlagigen Nahtbereich eine Auflage tiefer in das Gewebe eindringen kann, als in den dichteren Konstruktionsbereichen. Obwohl sich diese Konstruktion schon eignet, die Nahtdichtigkeit in der Gewebeebene zu verbessern, ermöglicht sie betreffend die Sicherheit noch keine zufriedenstellenden Ergebnisse. In den einlagigen Bereichen liegt eine Übereinanderschichtung von wenigstens drei Schichten vor, nämlich erste Schicht: obere Beschichtungs-Auflage, zweite Schicht: einlagiger Gewebebereich und dritte Schicht: untere Beschichtungs-Auflage. Das sich zwischen den Auflagen befindliche Gewebematerial hat eine bestimmte Dicke, ist naturgemäß nicht dicht und kann dadurch einen Gasdurchgang durch das Gewebe in der Gewebeebene zwischen den Auflagen bzw. Folien hindurch ermöglichen. In der Folge können die heute geforderten Standzeiten von Airbags, speziell Seiten- oder Kopfairbags schwerlich erreicht werden, es sei denn durch Kompensieren des Gasverlusts mittels sehr kostspieliger Generatoren, die das entwichene Gas z. B. über mehrere Stufen nachfördern. Mit "Standzeit" ist die Zeitdauer gemeint, für welche ein Airbag nach Beginn des Aufblasvorganges infolge eines Unfalls im Wesentlichen auf geblasen bleibt und die Funktion eines Schutzkissens für den Fahrgast hat und auf rechterhält. Der Gasverlust muss ggf. auch durch eine größere Menge Treibmittel ausgeglichen werden. Ein weiterer Nachteil besteht darin, dass durch eben diese Leckagen in der Naht Gas in den Fahrgastraum gelangen kann, was bei den Fahrgästen Gesundheitsschäden durch das Gas an sich oder durch dessen hohe Temperatur zur Folge haben könnte.

Es ist eine Aufgabe der Erfindung, eine Nahtkonstruktion vorzuschlagen, mit der aus dem Stand der Technik bekannte Nachteile vermieden oder zumindest verringert werden.

Die Aufgabe wird gelöst durch eine Nahtkonstruktion gemäß Anspruch 1, die gekennzeichnet ist durch eine Webnaht mit einem einlagigen Nahtbereich, welcher von einem wenigstens zweilagigen Bereich umgeben ist, dessen einzelne Lagen jeweils eine losere Gewebestruktur aufweisen als der einlagige Bereich, wobei der zweilagige Bereich eine obere Lage und eine untere Lage aufweist, wobei die beiden Lagen unterschiedliche und jeweils losere Gewebestrukturen aufweisen als der einlagige Bereich. Durch die erfindungsgemäß verbesserte Nahtkonstruktion wird das Erreichen einer wesentlich höheren Dichtigkeit eines OPW-Luftsackes möglich, da die Menge des durch Leckagen entweichenden Gases wesentlich reduziert werden kann, da Auflagen oder Beschichtungen auf dem Gewebe im Nahtbereich sehr tief in das Gewebe eindringen können und damit der Abstand der Beschichtungen voneinander minimiert wird. Damit können die geforderten hohen Standzeiten leicht erreicht werden, sowie die Eindringtiefe einer Beschichtung oder Auflage auf beiden Seiten des Gewebes individuell ausgewählt werden. Dies ist besonders bei Übergängen von zwei- auf vier- oder mehrlagige Luftsackgewebe von Vorteil, wenn die "zur Druckseite zeigende" Gewebeseite, d. h. die Gewebeseite, welche durch den Druck des Aufblasgases beaufschlagt wird, in der Regel die Innenseite des Luftsackes, eine andere Gewebestruktur haben soll, als die gegenüberliegende.

In einer vorteilhaften Weiterbildung der Erfindung ist die Nahtkonstruktion dadurch gekennzeichnet, dass der zweilagige Bereich die gleiche Fadenzahl aufweist wie der einlagige Bereich. Dies gewährleistet vorteilhafterweise ein ausgeglichenes Gewebe und minimiert Gewebeverzüge.

In einer anderen vorteilhaften Weiterbildung der Erfindung ist die Nahtkonstruktion dadurch gekennzeichnet, dass die obere Lage in Leinwandbindung L1/1 und die untere Lage in Panamabindung P3/3 ausgebildet ist. Eine derartige Konstruktion hat sich insbesondere zur Minimierung von Gewebeverzügen als sehr zweckmäßig erwiesen.

In einer anderen vorteilhaften Weiterbildung der Erfindung ist die Nahtkonstruktion dadurch gekennzeichnet, dass die Webnaht einen einlagigen Nahtbereich aufweist, welcher von einem dreilagigen Bereich umgeben ist. Damit lässt sich der Vorteil der Vor-Einstellbarkeit der individuellen Gewebestruktur und des Eindringverhaltens von Auflagen noch steigern.

In einer anderen vorteilhaften Weiterbildung der Erfindung ist die Nahtkonstruktion dadurch gekennzeichnet, dass der dreilagige Bereich die gleiche Fadenzahl aufweist wie der einlagige Bereich. Dies steigert vorteilhafterweise die Schaffung eines ausgeglichenen Gewebes und das Verringern von Gewebeverzügen.

In einer anderen vorteilhaften Weiterbildung der Erfindung ist die Nahtkonstruktion dadurch gekennzeichnet, dass der dreilagige Bereich eine obere Lage, eine mittlere Lage und eine untere Lage aufweist, wobei die Lagen jeweils eine losere Gewebestruktur aufweisen als der einlagige Bereich. Grundsätzlich erhöhen sich damit vorteilhafterweise die Variationsmöglichkeiten weiter und vereinfachen eine individuelle Einstellung von Gewebebereichen auf vorbestimmte Bindungskonstruktionsanforderungen. Dies bringt daneben auflagenspezifisch ein noch besseres Eindringen der Auflagen in die Gewebestruktur mit sich.

In noch einer weiteren vorteilhaften Ausbildung der Erfindung ist die Nahtkonstruktion dadurch gekennzeichnet, dass die obere Lage und die untere Lage stellenweise miteinander abgebunden sind. Dies hat den Zweck, zu verhindern oder wenigstens zu erschweren, dass sich die Gewebelagen bei hohen Kammerdrücken im Luftsack, die sich aufgrund der Gewebestruktur zwischen den Auflagen der dichten Bereiche zwischen den Lagen aufbauen, trennen bzw. voneinander lösen.

Generell als neu zu betrachten ist, dass die erfindungsgemäße Art der Nahtabdichtung nicht nur über eine einlagige Nahtbindung oder mit einer loseren Gewebebindung, sondern mit einer mehrlagigen Bindungskonstruktion oder Kombinationen aus ein- und mehrlagigen Bindungskonstruktionen erreicht wird.

Die Erfindung wird im Folgenden anhand einiger Ausführungsbeispiele unter Zuhilfenahme einer Zeichnung kurz beschrieben.
- Fig. 1: zeigt eine aus dem Stand der Technik bekannte gewebte Standardnaht.
- Fig. 2: zeigt ein Beispiel einer erfindungsgemäßen Konstruktion einer Webnaht.
- Fig. 3: zeigt im Wesentlichen die Nahtkonstruktion gemäß Figur 2, jedoch ist der lose Nahtbereich noch einmal abgebunden.
- Fig. 4: zeigt einen Gewebeausschnitt mit einer Naht mit einem losen Nahtbereich, der durch eine dreilagige Ausgestaltung der Naht noch loser gestaltet ist.

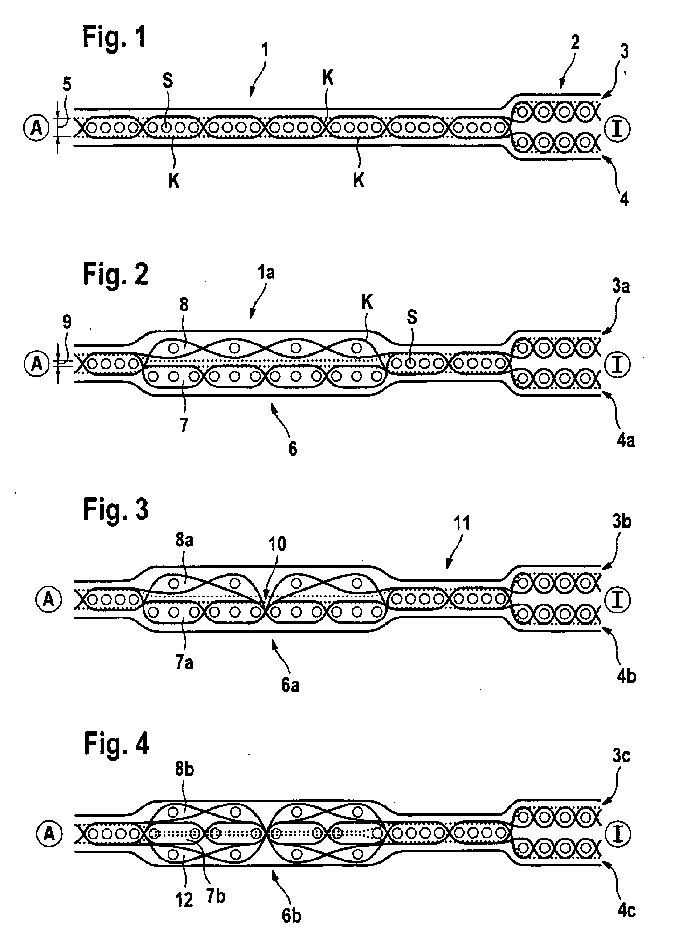

In den Figuren 1 bis 4 ist schematisch ein Ausschnitt einer Webnaht 1 eines OPW-Luftsackes mit daran anschließendem Teil eines Kammerbereichs 2 des Luftsacks im Querschnitt dargestellt. Dünne Kreise sollen - gleichsam durch die Zeichenebene dringende - Schussfäden S im Querschnitt darstellen. Dicke schwarze Linien sollen - zur Zeichenebene im Wesentlichen parallel verlaufende - Kettfäden K darstellen. Die Gewebekonstruktion kann jedoch auch umgekehrt ausgeführt werden, sodass Schuss- und Kettfäden jeweils vertauscht sind.

Jeweils auf der Ober- und Unterseite aufliegend sind Auflagen 3, 3a, 3b, 3c, 4, 4a, 4b, 4c, das sind z. B. auflaminierte oder aufgerakelte Beschichtungen zur Abdichtung des Gewebes, dargestellt. Die Auflagen 3, 3a, 3b, 3c, 4, 4a, 4b, 4c sind jeweils nach außen mit durchgezogenen Linien begrenzt und in Richtung Gewebe mit gepunkteten Linien angegeben. Die gepunkteten Linien zeigen damit auch die Eindringtiefe der Auflage in das Gewebe an.

In Figur 1 ist eine aus dem Stand der Technik bekannte Standardnaht abgebildet. Bedingt durch die Dichte dieser Naht können die Beschichtungsauflagen 3 und 4 nur geringfügig in die Gewebestruktur eindringen. Dieses hat zur Folge, dass in der Gewebeebene ein Abstand 5 zwischen den gegenüberliegenden Auflagen verbleibt. Aufgrund dieses Abstandes 5 kann durch die zwischen den gegenüberliegenden Auflagen liegende Gewebestruktur Gas aus dem Kammerbereich 1, also Innenbereich des Luftsackes, nach außen, d. h. nach A entweichen.

In Figur 2 ist ein Beispiel einer erfindungsgemäßen Konstruktion einer Webnaht 1a gezeigt, bei der ein Teil der Naht 6 zweilagig ausgebildet ist. Die untere Lage 7 ist z. B. in Panamabindung P3/3 und die obere Lage 8 ist z. B. in Leinwandbindung 1/1 ausgebildet. Bedingt durch die hierdurch losere Gewebestruktur 6 können die Auflagen in diesen Nahtbereich tiefer eindringen, d. h. der Abstand 9 zwischen den sich gegenüberliegenden Auflagen reduziert sich gegenüber der Situation gemäß Fig. 1, mit der Folge, dass sich der oben beschriebene Gasverlust ebenfalls reduziert.

Figur 3 entspricht im Wesentlichen der Figur 2, jedoch ist der lose Nahtbereich an der Position 10 noch einmal abgebunden. Hierdurch wird eine Trennung der Lagen 7a und 8a bei hohen Kammerdrücken, die sich durch die Gewebestruktur zwischen den Auflagen der dichten Bereiche 11 zwischen den Lagen 7a und 8a aufbauen, erschwert bzw. verhindert.

In Figur 4 ist der lose Nahtbereich 6b durch eine dreilagige Ausgestaltung, obere Lage 8b, mittlere Lage 7b und untere Lage 12 noch loser gestaltet. Dadurch ist auflagenspezifisch ein noch besseres Eindringen der Auflage in die Gewebestruktur möglich.

## Patentansprüche

1. Nahtkonstruktion für ein Gewebe für einen OPW-Airbag, insbesondere für Personenrückhaltesysteme, mit einer Webnaht (1 a) mit einem einlagigen Bereich, welcher von einem wenigstens zweilagigen Bereich (6) umgeben ist, dessen einzelne Lagen jeweils eine losere Gewebestruktur aufweisen als der einlagige Bereich, **dadurch gekennzeichnet, dass** der zweilagige Bereich (6) eine obere Lage (8) und eine untere Lage (7) aufweist, wobei die beiden Lagen unterschiedliche und jeweils losere Gewebestrukturen aufweisen als der einlagige Bereich.

2. Nahtkonstruktion nach Anspruch 1, **dadurch gekennzeichnet, dass** der zweilagige Bereich (6) die gleiche Fadenzahl aufweist wie der einlagige Bereich.

3. Nahtkonstruktion nach Anspruch 1 oder 2, **dadurch gekennzeichnet, dass** die obere Lage (8) in Leinwandbindung L1/1 und die untere Lage (7) in Panamabindung P3/3 ausgebildet ist.

4. Nahtkonstruktion nach Anspruch 1 oder 2, **dadurch gekennzeichnet, dass** die Webnaht einen einlagigen Nahtbereich aufweist, welcher von einem dreilagigen Bereich (6b) umgeben ist.

5. Nahtkonstruktion nach Anspruch 4, **dadurch gekennzeichnet, dass** der dreilagige Bereich (6b) die gleiche Fadenanzahl aufweist wie der einlagige Bereich.

6. Nahtkonstruktion nach Anspruch 4 oder 5, **dadurch gekennzeichnet, dass** der dreilagige Bereich (6b) eine obere Lage (8b), eine mittlere Lage (7b) und eine untere Lage (12) aufweist, wobei die Lagen jeweils eine losere Gewebestruktur aufweisen als der einlagige Bereich.

7. Nahtkonstruktion nach einem der vorhergehenden Ansprüche, **dadurch gekennzeichnet, dass** die obere Lage (8, 8a, 8b) und die untere Lage (7, 7a, 7b) stellenweise miteinander verbunden sind.

## Claims

1. A seam construction for an (one-piece-woven) OPW air bag woven fabric, particularly for passenger restraint systems, comprising a woven seam (1 a) having a single-ply portion surrounded by an at least two-ply portion (6), the individual plies of which each comprise a looser woven structure than that of the single-ply portion, **characterized in that** the two-ply portion (6) comprises an upper ply (8) and a lower ply (7), both of which differ from the single-ply portion by each having a looser woven structure.

2. The seam construction as set forth in claim 1, **characterized in that** the two-ply portion (6) comprises the same number of threads as that of the single-ply portion.

3. The seam construction as set forth in claim 1 or 2, **characterized in that** the upper ply (8) has a plain weave L1/1 and the lower ply (7) a basket weave P3/3.

4. The seam construction as set forth in claim 1 or 2, **characterized in that** the woven seam comprises a single-ply seam portion surrounded by a three-ply portion (6b).

5. The seam construction as set forth in claim 4, **characterized in that** the three-ply portion (6b) comprises the same number of threads as the single-ply portion.

6. The seam construction as set forth in claim 4 or 5, **characterized in that** the three-ply portion (6b) features an upper ply (8b), a middle ply (7b) and a lower ply (12), each having a looser woven structure than that of the single-ply portion.

7. The seam construction as set forth in any of the preceding claims, **characterized in that** the seam construction is **characterized in that** the upper ply (8, 8a, 8b) and the lower ply (7, 7a, 7b) are interconnected here and there.

## Revendications

1. Construction de joint pour un tissu destiné à un airbag OPW, plus particulièrement à des systèmes de retenue de personnes, dotée d'un joint tissé (1 a) avec une section à couche unique, laquelle est entourée d'une section à deux couches (6) au moins dont les couches individuelles présentent chacune une structure tissée plus lâche que la partie à couche unique, **caractérisée en ce que** la section à deux couches (6) présente une couche supérieure (8) et une couche inférieure (7) et **en ce que** les deux couches présentent des structures tissées différentes et chaque fois plus lâches par rapport à la section à couche unique.

2. Construction de joint selon la revendication 1, **caractérisée en ce que** la section à deux couches (6) présente le même nombre de fils que la section à couche unique.

3. Construction de joint selon la revendication 1 ou 2, **caractérisée en ce que** la couche supérieure (8) est réalisée sous forme de tissage en armure toile L1/1 et la couche inférieure (7) sous forme de tissage natté P3/3.

4. Construction de joint selon la revendication 1 ou 2, **caractérisée en ce que** le joint tissé présente une section de joint à couche unique, laquelle est entourée d'une section à trois couches (6b).

5. Construction de joint selon la revendication 4, **caractérisée en ce que** la section à trois couches (6b) présente le même nombre de fils que la section à couche unique.

6. Construction de joint selon la revendication 4 ou 5, **caractérisée en ce que** la section à trois couches (6b) présente une couche supérieure (8b), une couche intermédiaire (7b) et une couche inférieure (12) et **en ce que** les couches individuelles présentent toutes une structure tissée plus lâche que la section à couche unique.

7. Construction de joint selon une des revendications ci-dessus, **caractérisée en ce que** la couche supérieure (8, 8a, 8b) et la couche inférieure (7, 7a, 7b) sont reliées par endroits les unes aux autres.
